# FASCICULE DE BREVET EUROPEEN

(11) **EP 1 466 673 B1**
(45) Date de publication et mention de la délivrance du brevet: **05.03.2008**
(21) Numéro de dépôt: 04290861.6
(22) Date de dépôt: 01.04.2004
(51) Int. Cl.: B09B 3/00, E04G 23/08, B08B 15/00

(54) **Procédé de dépollution et de déconstruction de cowper**
Verfahren zur Dekontamination und Zerlegung von Winderhitzern
Method for decontaminating and demolishing cowpers

(30) Priorité: 11.04.2003 FR 0304538
(43) Date de publication de la demande: 13.10.2004
(73) Titulaire: ETIP SA, 57240 Nilvange (FR)
(72) Inventeur: Leclerc, Sylvain, 57240 Nilvange (FR)
(74) Mandataire: Burbaud, Eric

(56) Documents cités:
- EP-A- 1 123 754
- DE-A- 3 925 941
- DE-A- 4 219 727
- FR-A- 2 815 276

## Description

La présente invention est relative aux procédés de dépollution de bâtiments de type Cowper.

Plus particulièrement, l'invention concerne un procédé de dépollution d'un bâtiment de type Cowper, ce bâtiment comportant une enveloppe rigide extérieure qui présente une face interne sur laquelle des matériaux pollués sont fixés en au moins une zone à dépolluer, ce procédé comprenant des étapes au cours desquelles :
(a) on amène le bâtiment au sol sans endommager la zone à dépolluer,
(b) on met en place une installation de dépollution, incluant un confinement, de manière à former une enceinte isolant au moins la zone à dépolluer de l'atmosphère extérieure, et
(c) on dépollue le bâtiment à l'intérieur de ladite enceinte.

Un bâtiment de type Cowper de haut fourneau présente une forme globalement cylindrique d'une trentaine de mètres de hauteur et d'une dizaine de mètres de diamètre, recouvert d'un dôme creux. Il est constitué principalement d'une enveloppe métallique extérieure englobant un ruchage en brique ou autres, et une cheminée excentrée creuse. La face interne de l'enveloppe métallique est souvent garnie de fibres d'amiante, en particulier du côté cheminée. Lorsqu'on souhaite déconstruire le Cowper, on ne peut détruire entièrement le bâtiment car l'amiante risquerait alors d'être volatilisée dans l'atmosphère. On doit mettre en place une installation contraignante de désamiantage en plaçant toute la structure dans un confinement en dépression.

Ces installations réglementaires de dépollution sont mal adaptées pour dépolluer un tel bâtiment d'une trentaine de mètres de haut debout. Pour ne pas avoir à réaliser une dépollution sur toute la hauteur du bâtiment avant la destruction, ce qui constituerait une entreprise compliquée et dangereuse, le document EP-A-1123754 décrit un procédé selon le préambule de la revendication 1, dans lequel on dépollue le Cowper au sol, après l'avoir fait chuter intact, en préservant sa structure. Néanmoins, il reste contraignant d'utiliser un confinement englobant toute la structure, même au sol, du bâtiment. Ceci nécessite par exemple des moyens conséquents pour garantir la dépression d'un volume englobant le Cowper. En outre, des opérations telles que la découpe de la peau métallique extérieure peuvent s'avérer difficiles et dangereuses, en particulier pour des opérateurs revêtant des équipements réglementaires de protection entravant leurs mouvements.

La présente invention a notamment pour but de pallier ces inconvénients.

A cet effet, selon l'invention, un procédé du genre en question est essentiellement caractérisé en ce que, au cours de l'étape (b), on raccorde le confinement à une zone non polluée du bâtiment, de manière à ce que le confinement et l'enveloppe métallique extérieure du bâtiment forment conjointement l'enceinte isolant la zone à dépolluer de l'atmosphère extérieure,
et en ce que, au cours de l'étape (c), on dépollue le bâtiment par l'intérieur.

Grâce à ces dispositions, on minimise le volume des installations de dépollution à mettre en place, et on n'a pas à découper la peau rigide externe du bâtiment, ce qui est bénéfique entre autres en termes de facilité de mise en oeuvre, et de sécurité pour le personnel.

Dans des modes de réalisation préférés de l'invention, on peut éventuellement avoir recours en outre à l'une et/ou à l'autre des dispositions suivantes :
- le procédé comprend en outre une étape (a') comprise entre l'étape (a) et l'étape (b), au cours de laquelle on déconstruit une partie intérieure inférieure du bâtiment constituée exclusivement de matériaux sains ;
- au cours de l'étape (a), on forme sur le sol un remblai adapté pour amortir la chute du bâtiment, et adapté pour que le bâtiment ayant chu se situe encore au dessus du niveau du sol, le procédé comprenant en outre une étape (a") comprise entre les étapes (a) et (b), au cours de laquelle on fait rouler le bâtiment jusqu'à ce que la zone à dépolluer se situe au moins partiellement à proximité du sol ;
- pour un bâtiment dont la zone à dépolluer s'étend sur au moins une partie inférieure de la hauteur du bâtiment, le procédé comprend en outre une étape (d) précédant l'étape (a), au cours de laquelle on dépollue par l'extérieur ladite partie inférieure, en installant ladite installation de désamiantage autour de ladite partie inférieure et en y démontant ladite enveloppe rigide externe depuis l'extérieur du bâtiment ;
- au cours de l'étape (b),
   . on réalise un dallage à proximité d'une partie inférieure du bâtiment,
   . on monte un échafaudage sur ledit dallage, dont la hauteur correspond environ au diamètre du bâtiment, et
   . on réalise un confinement recouvrant l'échafaudage et ladite partie inférieure du bâtiment ;
- au cours de l'étape (c), on place l'échafaudage à l'intérieur du bâtiment en au moins un point de dépollution, duquel point on extrait les matériaux pollués voisins ;
- au cours de l'étape (c), on place l'intérieur de l'enceinte en dépression par rapport à l'atmosphère ;
- au cours de l'étape (c),
   . on réalise des ouvertures dans ladite enveloppe extérieure au niveau d'une région préalablement déconstruite intérieurement,
   . on place des filtres au niveau desdites ouvertures, et
   . on place au moins un extracteur adapté pour mettre ladite enceinte en dépression ;
- le bâtiment à dépolluer présente un corps cylindrique recouvert d'un dôme creux, le corps cylindrique comprenant un ruchage en brique et une cheminée cylindrique excentrée creuse ;

Selon un autre aspect, l'invention concerne un procédé de déconstruction dans lequel on met en oeuvre un tel procédé de dépollution, ce procédé de déconstruction comprenant en outre
- une étape (e) postérieure à l'étape (c), dans laquelle on retire l'installation de dépollution, et
- une étape (f) postérieure à l'étape (e), dans laquelle on déconstruit à l'air libre l'enveloppe rigide dépolluée.

D'autres caractéristiques et avantages de l'invention apparaîtront au cours de la description suivante d'une de ses formes de réalisation, donnée à titre d'exemple non limitatif, en regard des dessins joints.

Sur les dessins :
- les figures 1 et 1a sont des vues schématiques en coupe représentant un Cowper,
- la figure 2 est une vue schématique en coupe représentant un Cowper abattu,
- les figures 3a à 3c sont des vues schématiques en coupe des différentes étapes du désamiantage,
- la figure 4 est une vue schématique en coupe d'une étape du procédé selon l'invention, et
- la figure 5 est une vue schématique en coupe d'une autre étape du procédé selon l'invention.

Sur les différentes figures, les mêmes références désignent des éléments identiques ou similaires.

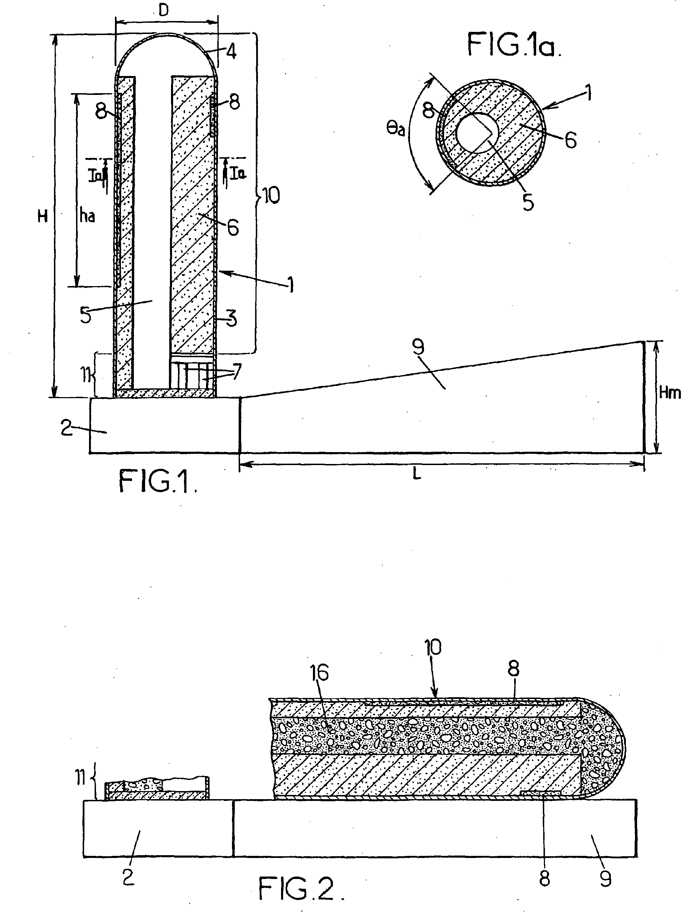

La figure 1 représente un bâtiment 1 destiné à être dépollué et déconstruit selon l'invention. Le bâtiment représenté sur la figure 1 est ici un Cowper de haut fourneau, mais pourrait tout aussi bien être un autre bâtiment présentant des caractéristiques similaires, en particulier en ce qui concerne la localisation des polluants dans le bâtiment. Le Cowper se présente comme une tour de hauteur H comprise entre 30 et 50 mètres environ, de diamètre D d'une dizaine de mètres environ, reposant sur une banquette 2, de 4 à 6 mètres de haut, destinée à soutenir la masse du Cowper. Le Cowper présente généralement une enveloppe 3 métallique qui a la forme d'un cylindre surplombé d'un dôme 4, par exemple hémisphérique. L'intérieur du Cowper est généralement constitué d'une cheminée 5, par exemple cylindrique, excentrée par rapport à l'axe central du corps cylindrique du Cowper, et d'un puits de ruchage 6, majoritairement composé à partir de briques. Ce puits de ruchage est éventuellement soutenu par des piliers 7.

Cette structure de cheminée et de puits de ruchage s'étend globalement dans toute la partie cylindrique du Cowper, de sorte que la cheminée 5 et le dôme 4, également creux, soient en communication.

Le Cowper, ou tout autre bâtiment de ce type, qu'on cherche à dépolluer, contient des éléments polluants, tels que de l'amiante ou autre, de sorte qu'une démolition, par exemple à l'explosif, du bâtiment risquerait de volatiliser des particules de polluants dans l'atmosphère, ce qui est contraire aux réglementations en vigueur et, de plus, nocif pour les intervenants, les riverains, et autres.

Les éléments polluants 8 sont par exemple assemblés par plaques et fixés à l'intérieur du Cowper sur la face interne de l'enveloppe métallique 3. Ces éléments polluants 8 sont par exemple répartis dans une zone s'étendant sur une hauteur hₐ du Cowper, qui peut s'étendre sur tout ou partie de la hauteur du Cowper.

La figure 1a représente une vue en coupe Ia-Ia de la figure 1 du Cowper. Les éléments polluants 8 peuvent s'étendre sur toute la périphérie du Cowper, ou sur une étendue angulaire θₐ, par exemple de l'ordre de 90°. Dans le cas d'un Cowper, il est fréquent que, si les éléments polluants ne s'étendent que sur une fraction angulaire θₐ de la périphérie du Cowper, ils soient situés à proximité de la cheminée 5 du Cowper, comme représenté sur la figure 1a. Néanmoins, les procédés selon l'invention peuvent être adaptés à tout type de répartition de polluants.

Ainsi, le procédé mis en oeuvre selon l'invention peut s'appliquer à tout type de bâtiment présentant des éléments polluants 8 sur la face interne d'une enveloppe métallique rigide 3 sur tout ou partie de la hauteur et de la périphérie dudit bâtiment.

En se référant à nouveau à la figure 1, on se propose de dépolluer le bâtiment, non pas debout, mais couché, après avoir fait chuter le bâtiment 1 en s'assurant que les parties contenant les éléments polluants 8 ne subissent pas de dommages importants au cours de cette chute.

A cet effet, si les éléments polluants ne se situent qu'en une région suffisamment élevée du bâtiment 1, on peut mettre en oeuvre le procédé décrit ci-après.

On réalise un merlon 9 constitué de matériaux amortissants tels que par exemple de la terre ou autre, et destiné à recevoir et à amortir la chute du bâtiment 1. Ce merlon 9 est par exemple situé du côté du Cowper opposé à la cheminée 5, c'est-à-dire plutôt du côté du ruchage 6. Le merlon 9 peut par exemple présenter une forme trapézoïdale, de longueur L environ égale ou supérieure à la hauteur H du Cowper, et dont la hauteur par rapport au niveau du sol s'élève à mesure que l'on s'éloigne du Cowper, par exemple jusqu'à atteindre une hauteur Hₘ d'environ 8 mètres. Le merlon peut également présenter deux bords latéraux inclinés s'étendant jusqu'au sol.

On peut alors faire chuter le Cowper en plaçant une quantité appropriée d'explosif au niveau de la base du Cowper, principalement du côté du Cowper à proximité duquel le merlon 9 a été réalisé, et par exemple dans les piliers 7 soutenant le puits de ruchage 6 du Cowper.

On peut avoir préalablement consolidé l'intérieur du bâtiment, par exemple en remplissant ses parties creuses, tels la cheminée 5 et le dôme 4, d'un matériau fluide 16 solidifiant à l'intérieur du Cowper avant l'explosion, comme représenté sur la figure 2. On utilise par exemple un matériau de type béton ou analogue. Cette consolidation permet que, lors de la chute du Cowper, celui-ci ne se disloque pas, ce qui aurait pour effet la dispersion de matériaux polluants dans l'atmosphère.

Si le bâtiment possède des ouvertures dans sa périphérie, et en particulier dans sa partie basse, on peut avoir préalablement calfeutré ces ouvertures dans le but de conserver l'intégrité de la structure lors de sa chute.

Comme représenté sur la figure 2, après l'explosion, une partie supérieure 10 du Cowper a été recueillie par le merlon 9 amortisseur. La partie supérieure 10 du Cowper est quasiment intacte, et contient tous les éléments polluants 8 à dépolluer. Au cours de la chute, une quantité non négligeable de matériaux du merlon peut s'être envolée, de sorte que le Cowper peut reposer de manière sensiblement horizontale, par exemple, sur le merlon 9. Le merlon 9 peut éventuellement avoir été dimensionné pour obtenir l'inclinaison souhaitée du Cowper après la chute.

En outre, suite à l'explosion, souvent une partie inférieure 11 du Cowper, ne présentant pas d'amiante, reste fixée à la banquette 2.

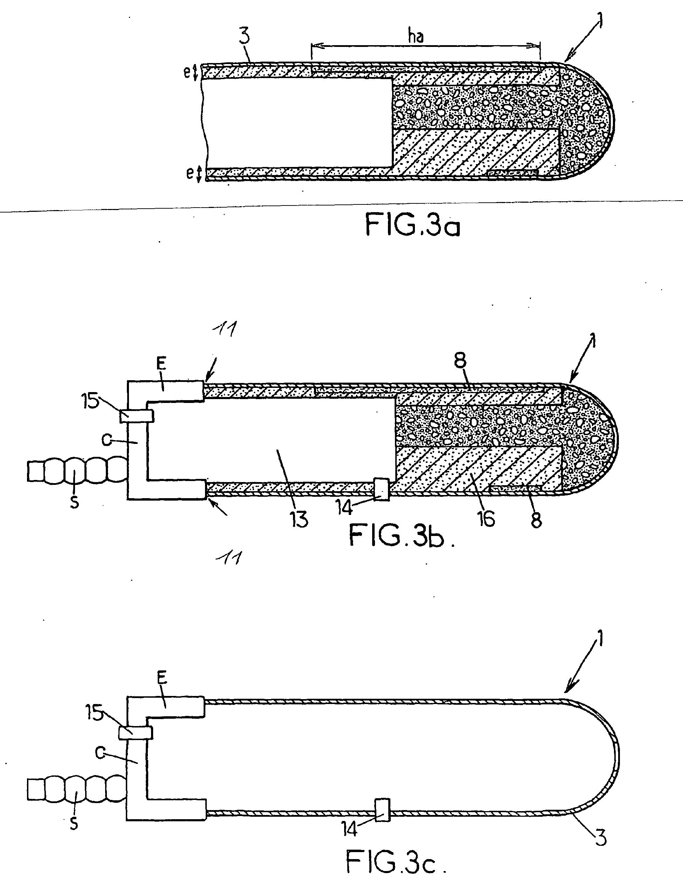

Comme représenté sur la figure 3a, on peut ensuite extraire mécaniquement, à l'aide d'engins tels que des mini-pelles, ou autres, les matériaux intérieurs sains du Cowper. Le Cowper faisant une dizaine de mètres de diamètre, il suffit de creuser depuis l'axe central du bâtiment et d'extraire tous les matériaux sains se situant à au moins une distance e du bord externe 3 du Cowper, sur lequel les éléments polluants sont fixés.

Cette opération peut être effectuée rapidement, car elle ne nécessite pas de mettre en oeuvre d'installation contraignante liée à la dépollution. Bien sûr, on effectue au cours de cette opération un contrôle renforcé de la qualité de l'air à l'aide d'un équipement adéquat, afin de prévenir tout risque de contamination.

Quand suffisamment de matériaux sains ont été extraits du bâtiment, on peut effectuer la dépollution de la structure restante, telle que représentée sur la figure 3b. On peut par exemple réaliser tout d'abord un dallage (non représenté) sur lequel est monté un échafaudage mobile E destiné à être déplacé à l'intérieur du Cowper au fur et à mesure de l'avancement des travaux. On réalise alors sur l'échafaudage le confinement C, par exemple sous la forme d'une double enveloppe de polyane ayant par exemple une épaisseur d'environ 200 micromètres, ou tout autre confinement classique. Ce confinement est lié de manière étanche à une partie inférieure 11 du Cowper. De cette manière, les éléments polluants 8 sont enfermés dans une enceinte constituée d'une part par l'enveloppe extérieure du Cowper elle-même, et d'autre part par le confinement.

On peut alors monter sur le confinement les différents éléments constitutifs réglementaires de l'installation de désamiantage, tels des sas S, comme par exemple un sas S cinq compartiments pour le personnel et un sas S trois compartiments pour le matériel (non représenté), ou tout autre type de sas réglementaire.

On peut par exemple réaliser en outre un confinement dynamique, en assurant une dépression de l'espace interne 13 par rapport à l'atmosphère. A cet effet, on peut avoir prévu une ouverture 14 munie d'un filtre absolu, dans une paroi du Cowper ne présentant pas d'éléments polluants, et un ou des extracteurs 15 assurant un flux d'air continuel dans l'espace interne 13.

On peut alors extraire manuellement les éléments polluants 8, et éventuellement mécaniquement la structure restante 16. Les opérations de désamiantage sont ainsi simplifiées, parce qu'il n'est pas nécessaire d'effectuer un découpage de la tôle extérieure pour accéder aux éléments polluants 8, et qu'en outre on peut utiliser à l'intérieur même du Cowper l'échafaudage ayant servi à mettre en place le confinement.

En outre, on peut extraire facilement, sans installation de décontamination, une grande quantité de matériaux avant de mettre en place le confinement, ce qui facilite considérablement les opérations. Cette opération est possible car les parties polluées n'ont pas accès à l'air libre extérieur à l'enceinte si on creuse la région centrale du bâtiment.

Une fois que la structure interne du Cowper a été extraite et dépolluée, on ne dispose plus, comme représenté sur la figure 3c, que de l'enveloppe métallique 3 dépolluée du Cowper. Si des tests réglementaires, tels des tests de qualité de l'air à l'intérieur de l'enveloppe 3, sont satisfaisants, en particulier en terme de densité de matériaux polluants dans l'air, on peut alors démonter les sas S et les installations de désamiantage E, 15, 14, et autres, et procéder en atmosphère libre à la déconstruction de l'enveloppe métallique 3 dépolluée, ce qui est à la fois plus facile et plus sûr pour le personnel.

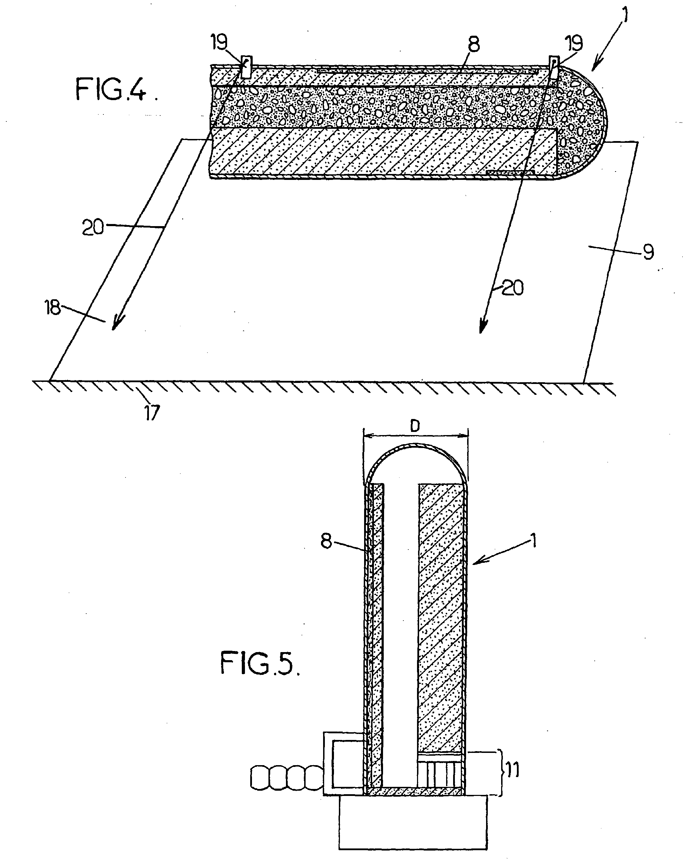

On décrit maintenant une autre étape du procédé dans un Cowper, les principales quantités d'éléments polluants sont en général trouvés sur la face interne de l'enveloppe métallique 3 se situant principalement du côté de la cheminée 5. Comme, pour éviter un écrasement du Cowper, lors de sa chute, on démolit de préférence une partie inférieure du Cowper situé du côté du ruchage, la cheminée se situe principalement dans la partie supérieure du Cowper une fois amené au sol (figure 2 par exemple). Ceci est relativement contraignant car, le diamètre d'un tel bâtiment étant d'environ une dizaine de mètres, les parties à désamianter se situent principalement à une dizaine de mètres d'altitude, et on est donc obligé de mettre en oeuvre un échafaudage. Selon une variante de l'invention représentée sur la figure 4, on peut prévoir une étape au cours de laquelle la partie à désamianter est amenée à proximité du sol.

A cet effet, on peut se servir avantageusement de la forme et de la disposition du merlon 9. On peut ainsi prévoir que le Cowper après sa chute sur le merlon 9 soit encore maintenu légèrement surélevé par rapport au niveau du sol 17, de sorte que l'on va pouvoir faire rouler le Cowper jusqu'au sol 17, le long d'un pan incliné 18 du merlon. A cet effet, on utilise des éléments de fixation 19 montés rigidement dans le Cowper, de préférence dans des régions du Cowper non amiantées, et on relie ces éléments de fixation à des câbles 20. On peut profiter avantageusement de la forme cylindrique du Cowper pour faire rouler celui-ci jusqu'au sol en tirant, à l'aide d'engins (non représentés), sur les câbles 20, selon une force pré dimensionnée fonction de la masse et de l'inertie du Cowper.

Une rotation d'un demi-tour du Cowper autour de son axe longitudinal lors du roulage permet ainsi d'amener la majorité des parties à dépolluer à proximité du sol, ce qui facilitera encore les opérations de dépollution à l'intérieur du Cowper par la suite (décrites précédemment).

Les procédés de désamiantage décrits ci-dessus peuvent être directement mis en oeuvre sur un bâtiment de type Cowper présentant des éléments polluants uniquement dans leur partie supérieure avant abattage. En effet, comme vu précédemment, le procédé d'abattage de Cowper nécessite par exemple de réaliser des ouvertures dans la partie inférieure de l'enveloppe métallique 3, par exemple pour y placer les explosifs, ce qui nécessite une absence complète d'amiante à ce niveau. En outre, au cours de l'abattage, il est fréquent qu'une partie inférieure 11 du Cowper reste fixée à la banquette 2, comme représenté sur la figure 2. Si des éléments polluants étaient situés à ce niveau, ceux-ci seraient volatilisés dans l'atmosphère au cours de l'étape d'abattage, ce qui n'est pas souhaitable. Pour pallier cet inconvénient, si le Cowper présente des éléments polluants 8 à la fois dans sa partie supérieure et sa partie inférieure, on peut prévoir, comme représenté sur la figure 5, de réaliser une étape préliminaire de désamiantage de la partie inférieure du Cowper, quand celui-ci est encore debout. On peut alors avantageusement utiliser le même matériel que celui qui est destiné à être utilisé lors de la dépollution au sol du Cowper, et en particulier un échafaudage environ de la taille du diamètre D du Cowper. Ainsi, après avoir effectué une dépollution préliminaire du Cowper debout, sur tout ou partie de sa périphérie, sur une hauteur D mesurée à partir du sol, on peut mettre en oeuvre les procédés précédents d'un Cowper à dépolluer ne présentant de l'amiante que dans une partie relativement supérieure. On peut alors faite chuter le Cowper par les moyens classiques précités, sans risquer de disperser des particules de polluants dans l'atmosphère.

## Revendications

1. Procédé de dépollution d'un bâtiment (1) de type Cowper, ce bâtiment comportant une enveloppe rigide extérieure (3) qui présente une face interne sur laquelle des matériaux pollués (8) sont fixés en au moins une zone à dépolluer, ce procédé comprenant des étapes au cours desquelles :
(a) on amène le bâtiment au sol sans endommager la zone à dépolluer,
(b) on met en place une installation de dépollution, incluant un confinement, de manière à former une enceinte isolant au moins la zone à dépolluer de l'atmosphère extérieure, et
(c) on dépollue le bâtiment à l'intérieur de ladite enceinte,
**caractérisé en ce que** au cours de l'étape (b), on raccorde le confinement à une zone non polluée du bâtiment, de manière à ce que le confinement et l'enveloppe métallique extérieure (3) du bâtiment forment conjointement l'enceinte isolant la zone à dépolluer de l'atmosphère extérieure,
**et en ce que**, au cours de l'étape (c), on dépollue le bâtiment par l'intérieur.

2. Procédé selon la revendication 1 comprenant en outre une étape (a') comprise entre l'étape (a) et l'étape (b), au cours de laquelle on déconstruit une partie intérieure inférieure (13) du bâtiment constituée exclusivement de matériaux sains.

3. Procédé selon l'une quelconque des revendications précédentes, dans lequel, au cours de l'étape (a), on forme sur le sol un remblai (9) adapté pour amortir la chute du bâtiment, et adapté pour que le bâtiment ayant chu se situe encore au dessus du niveau du sol (17), le procédé comprenant en outre une étape (a") comprise entre les étapes (a) et (b), au cours de laquelle on fait rouler le bâtiment (1) jusqu'à ce que la zone à dépolluer se situe au moins partiellement à proximité du sol (17).

4. Procédé selon l'une quelconque des revendications précédentes pour un bâtiment dont la zone à dépolluer s'étend sur au moins une partie inférieure de la hauteur du bâtiment, le procédé comprenant en outre une étape (d) précédant l'étape (a), au cours de laquelle on dépollue par l'extérieur ladite partie inférieure, en installant ladite installation de désamiantage autour de ladite partie inférieure et en y démontant ladite enveloppe rigide externe (3) depuis l'extérieur du bâtiment.

5. Procédé selon l'une quelconque des revendications précédentes, dans lequel, au cours de l'étape (b),
- on réalise un dallage à proximité d'une partie inférieure du bâtiment,
- on monte un échafaudage (E) sur ledit dallage, dont la hauteur correspond environ au diamètre du bâtiment, et
- on réalise un confinement (C) recouvrant l'échafaudage et ladite partie inférieure (11) du bâtiment.

6. Procédé de dépollution selon la revendication 5, dans lequel, au cours de l'étape (c), on place l'échafaudage (E) à l'intérieur du bâtiment en au moins un point de dépollution, duquel point on extrait les matériaux pollués (8) voisins.

7. Procédé de dépollution selon l'une quelconque des revendications précédentes, dans lequel, au cours de l'étape (c), on place l'intérieur de l'enceinte en dépression par rapport à l'atmosphère.

8. Procédé de dépollution selon la revendication 7, dans lequel, au cours de l'étape (c),
- on réalise des ouvertures dans ladite enveloppe extérieure au niveau d'une région préalablement déconstruite intérieurement,
- on place des filtres (14) au niveau desdites ouvertures, et
- on place au moins un extracteur (15) adapté pour mettre ladite enceinte en dépression.

9. Procédé de dépollution selon l'une quelconque des revendications précédentes, dans lequel le bâtiment à dépolluer présente un corps cylindrique recouvert d'un dôme creux (4), le corps cylindrique comprenant un ruchage (6) en brique et une cheminée (5) cylindrique excentrée creuse.

10. Procédé de déconstruction dans lequel on met en oeuvre un procédé de dépollution selon l'une quelconque des revendications précédentes, ce procédé de déconstruction comprenant en outre
- une étape (e) postérieure à l'étape (c), dans laquelle on retire l'installation de dépollution, et
- une étape (f) postérieure à l'étape (e), dans laquelle on déconstruit à l'air libre l'enveloppe rigide (3) dépolluée.

## Claims

1. Method of decontamination of a structure (1) of the Cowper stove type, this structure comprising an external rigid shell (3) which has an internal face on which contaminated materials (8) are fixed in at least one zone to be decontaminated, this method comprising steps during which:
(a) the structure is demolished without damaging the zone to be decontaminated,
(b) a decontamination installation is put in place which includes a containment in such a way as to form a chamber insulating at least the zone to be decontaminated from the external atmosphere, and
(c) the structure is decontaminated in the interior of the said chamber,
**characterised in that** during the step (b) the containment is connected to a non-contaminated zone of the structure in such a way that the containment and the external metal casing (3) of the structure jointly form the chamber insulating the zone to be decontaminated from the external atmosphere, and **in that** during the step (c) the structure is decontaminated from the interior.

2. Method as claimed in Claim 1 further comprising a step (a') between the step (a) and the step (b) during which a lower internal part (13) of the structure consisting exclusively of clean materials is dismantled.

3. Method as claimed in any one of the preceding claims, in which during the step (a) an embankment (9) is formed on the ground, the embankment being adapted to cushion the fall of the structure and adapted so that the structure, when it has fallen, is still situated above the level of the ground (17), the method further comprising a step (a") between the steps (a) and (b), during which the structure (1) is caused to travel until the zone to be decontaminated is situated at least partially close to the ground (17).

4. Method as claimed in any one of the preceding claims for a structure in which the zone to be decontaminated extends over at least a lower part of the height of the structure, the method further comprising a step (d) which precedes the step (a) and during which the said lower part is decontaminated from the exterior by installing the said asbestos removal installation around the said lower part and removing the said rigid external shell (3) there from the exterior of the structure.

5. Method as claimed in any one of the preceding claims, in which during the step (b)
- a slab covering is produced close to a lower part of the structure,
- a platform (E) is mounted on the said slab covering, the height of the platform corresponding approximately to the diameter of the structure, and
- a containment (C) is produced which covers the platform and the said lower part (11) of the structure.

6. Method of decontamination as claimed in Claim 5, in which during the step (c) the platform (E) is placed in the interior of the structure in at least one decontamination point, from which point the contaminated materials (8) are extracted.

7. Method of decontamination as claimed in any one of the preceding claims, in which during the step (c) the interior of the chamber is placed under a negative pressure relative to the atmosphere.

8. Method of decontamination as claimed in Claim 7, in which during the step (c),
- openings are produced in the said external casing at the level of a region which was previously dismantled internally,
- filters (14) are placed at the level of the said openings, and
- at least one extractor (15) is positioned which is adapted to place the said chamber under a negative pressure.

9. Method of decontamination as claimed in any one of the preceding claims, in which the structure to be decontaminated has a cylindrical body covered by a hollow dome (4), the cylindrical body comprising a brick chequerwork (6) and a hollow eccentric cylindrical chimney (5).

10. Method of dismantling in which a method of decontamination as claimed in any one of the preceding claims is carried out, this method of dismantling further comprising
- a step (e) subsequent to the step (c), in which the decontamination installation is withdrawn, and
- a step (f) subsequent to the step (e), in which the decontaminated rigid casing (3) is dismantled in the open air.

## Patentansprüche

1. Sanierungsverfahren eines Bauwerks (1) des Typs Cowper, wobei dieses Bauwerk einen starren Außenmantel (3) aufweist, der eine Innenseite hat, auf der verschmutzte Materialien (8) in mindestens einer zu sanierenden Zone befestigt sind, wobei dieses Verfahren Schritte aufweist, in deren Verlauf:
(a) man das Bauwerk auf den Boden bringt, ohne die zu sanierende Zone zu beschädigen,
(b) man eine Sanierungsanlage einrichtet, die einen Einschluss aufweist, so dass eine isolierende Abschirmung mindestens der zu sanierenden Zone von der Außenluft gebildet wird, und
(c) man das Bauwerk im Inneren der Abschirmung saniert,
**dadurch gekennzeichnet, dass** man im Laufe des Schritts (b) den Einschluss an eine nicht verschmutzte Zone des Bauwerks derart anschließt, dass der Einschluss und der metallische Außenmantel (3) des Bauwerks gemeinsam die Abschirmung bilden, die die zu sanierende Zone von der Außenluft isoliert,
und **dadurch**, dass man im Laufe des Schritts (c) das Bauwerk von innen her saniert.

2. Verfahren nach Anspruch 1, das ferner einen Schritt (a') aufweist, der zwischen dem Schritt (a) und dem Schritt (b) liegt, in dessen Verlauf man einen unteren inneren Teil (13) des Bauwerks, der ausschließlich aus unverschmutzten Materialien besteht, dekonstruiert.

3. Verfahren nach einem der vorhergehenden Ansprüche, bei dem man im Laufe des Schritts (a) auf dem Boden eine Schüttung (9) bildet, die den Sturz des Bauwerks dämpfen kann und die dafür sorgt, dass sich das gestürzte Bauwerk noch über dem Bodenniveau (17) befindet, wobei das Verfahren ferner einen Schritt (a") aufweist, der zwischen den Schritten (a) und (b) liegt, und in dessen Verlauf man das Bauwerk (1) rollen lässt, bis sich die zu sanierende Zone zumindest teilweise in der Nähe des Bodens (17) befindet.

4. Verfahren nach einem der vorhergehenden Ansprüche für ein Bauwerk, dessen zu sanierende Zone sich über mindestens einen unteren Teil der Höhe des Bauwerks erstreckt, wobei das Verfahren ferner vor dem Schritt (a) einen Schritt (d) aufweist, in dessen Verlauf man den unteren Teil von außen her saniert, indem man die Asbestsanierungsanlage um den unteren Teil installiert und dort den starren Außenmantel (3) von der Außenseite des Bauwerks her demontiert.

5. Verfahren nach einem der vorhergehenden Ansprüche, bei dem man im Laufe des Schritts (b)
- ein Plattenwerk in der Nähe eines unteren Teils des Bauwerks herstellt,
- ein Gerüst (E) auf dem Plattenwerk installiert, dessen Höhe etwa dem Durchmesser des Bauwerks entspricht, und
- einen Einschluss (C) herstellt, der das Gerüst und den unteren Teil (11) des Bauwerks abdeckt.

6. Sanierungsverfahren nach Anspruch 5, bei dem man im Laufe des Schritts (c) das Gerüst (E) im Inneren des Bauwerks an mindestens einer Sanierungsstelle aufstellt und aus dieser Stelle die benachbarten verschmutzten Materialien (8) extrahiert.

7. Sanierungsverfahren nach einem der vorhergehenden Ansprüche, bei dem man im Laufe des Schritts (c) im Inneren der Abschirmung im Vergleich zur Umgebungsluft einen Unterdruck herstellt.

8. Sanierungsverfahren nach Anspruch 7, bei dem man im Laufe des Schritts (c)
- Öffnungen in dem Außenmantel auf der Ebene einer zuvor innen dekonstruierten Zone herstellt,
- Filter (14) auf der Ebene der Öffnungen anbringt und
- mindestens einen Extraktor (15) platziert, der in der Abschirmung Unterdruck herstellen kann.

9. Sanierungsverfahren nach einem der vorhergehenden Ansprüche, bei dem das zu sanierende Bauwerk einen zylindrischen Körper aufweist, der mit einem hohlen Dorn (4) abgedeckt ist, wobei der zylindrische Körper eine Gittermauerung (6) aus Ziegeln und einen exzentrierten hohlen zylindrischen Kamin (5) aufweist.

10. Dekonstruktionsverfahren, bei dem man ein Sanierungsverfahren nach einem der vorhergehenden Ansprüche einsetzt, wobei dieses Dekonstruktionsverfahren ferner Folgendes aufweist:
- einen Schritt (e) nach dem Schritt (c), bei dem man die Sanierungsanlage entfernt, und
- einen Schritt (f) nach dem Schritt (e), bei dem man an der freien Luft den sanierten starren Mantel (3) dekonstruiert.
